# EUROPÄISCHE PATENTSCHRIFT

(11) **EP 2 353 774 B1**
(45) Veröffentlichungstag und Bekanntmachung des Hinweises auf die Patenterteilung: **22.08.2012**
(21) Anmeldenummer: 11000288.8
(22) Anmeldetag: 14.01.2011
(51) Int. Cl.: B23Q 1/25

(54) **Spannvorrichtung mit einem Höhenausgleich**
Clamping device with height compensation
Dispositif de serrage doté d'un sytème de compensation en hauteur

(30) Priorität: 27.01.2010 DE 102010005886
(43) Veröffentlichungstag der Anmeldung: 10.08.2011
(73) Patentinhaber: Stark Spannsysteme GmbH, 6840 Götzis (AT)
(72) Erfinder: Kiefer, Roland Karlheinz, 6835 Zwischenwasser - Dafins (AT)
(74) Vertreter: Beier, Ralph

(56) Entgegenhaltungen:
- EP-A1- 1 344 599
- DE-A1-102007 031 463
- DE-U1-202009 006 429

## Beschreibung

Die Erfindung betrifft eine Spannvorrichtung zum mechanischen Spannen eines Werkstücks.

Bei der Bearbeitung von Werkstücken in Werkzeugmaschinen (z.B. Fräsmaschinen) werden die zu bearbeitenden Werkstücke herkömmlicherweise in Aufspannmodulen eingespannt, wobei die Aufspannmodule dann in einer entsprechenden Spannvorrichtung in der Werkzeugmaschine eingespannt werden können. Hierzu weisen die bekannten Aufspannmodule an ihrer Unterseite Einzugsnippel auf, die in eine entsprechend angepasste Aufnahmebohrung der Spannvorrichtung in der Werkzeugmaschine eingeführt und dann gespannt werden. Die Anmelderin vertreibt unter der Marke SPEEDY hydratec™ eine geeignete hydraulische Spannvorrichtung, wie sie ein ähnlicher Form beispielsweise in DE 10 2007 031 463 A1 beschrieben ist.

Nachteilig an den bekannten Spannvorrichtungen ist die Tatsache, dass sie das Werkstück nicht nur spannen und positionieren, sondern auch eine bestimmte Höhenausrichtung bewirken, da das Werkstück im gespannten Zustand auf einer Auflagefläche der Spannvorrichtung aufliegt. Bei einem Spannen eines Werkstücks oder eines Aufspannmoduls mit mehr als drei Spannvorrichtungen entsteht so eine mechanische Überbestimmung, was zu mechanischen Spannungen in dem Werkstück bzw. in dem gesamten Spannsystem führt, um die mechanische Überbestimmung auszugleichen.

Ferner ist aus DE 20 2009 006 429 U1 eine Spannvorrichtung bekannt, die eine Höhenanpassung mittels entsprechend hohen Ausgleichsadaptern ermöglicht. Zur Anpassung an verschiedene Höhenlagen müssen die Ausgleichsadapter deshalb ausgewechselt werden. Hierbei handelt es sich also nicht um einen Höhenausgleich in dem erfindungsgemäßen Sinne.

Weiterhin ist aus DE 31 26 720 A1 eine Spannvorrichtung bekannt, bei der das zu spannende Werkstück von Vakuumsaugern erfasst wird. Hierbei handelt es sich jedoch um eine grundsätzlich andersartige Spannvorrichtung.

Ferner ist zum Stand der Technik noch hinzuweisen auf EP 0 403 428 A2.

Schließlich ist zum Stand der Technik noch hinzuweisen auf EP 1 344 599 A1.

Der Erfindung liegt deshalb die Aufgabe zugrunde, eine entsprechend verbesserte Spannvorrichtung zu schaffen. Weiterhin liegt der Erfindung die Aufgabe zugrunde, ein Betriebsverfahren für eine derartige Spannvorrichtung anzugeben.

Diese Aufgabe wird durch die Spannvorrichtung bzw. das Betriebsverfahren gemäß den nebengeordneten Ansprüchen gelöst.

Die Erfindung umfasst die allgemeine technische Lehre, in die Spannvorrichtung einen Höhenausgleich zu integrieren, der einen vertikalen Ausgleichshub der Auflagefläche ermöglicht, um die vorstehend beschriebenen störenden Verspannungen zu vermeiden.

Die erfindungsgemäße Spannvorrichtung weist zunächst in herkömmlicher Weise eine Aufnahmebohrung zur Aufnahme eines Einzugsnippels auf, wobei der Einzugsnippel mit dem zu spannenden Werkstück verbunden ist.

Eine Möglichkeit hierzu besteht darin, dass der Einzugsnippel an einem Aufspannmodul angebracht bzw. angeformt ist, wobei das Aufspannmodul dann das zu spannende Werkstück aufnimmt. In diesem Fall erfolgt die Verbindung zwischen dem Einzugsnippel und dem zu spannenden Werkstück also mittelbar über das Aufspannmodul.

Eine andere Möglichkeit besteht jedoch im Rahmen der Erfindung darin, dass der Einzugsnippel direkt an dem zu spannenden Werkstück angebracht ist. Beispielsweise kann der Einzugsnippel ein Außengewinde aufweisen, das in ein entsprechend angepasstes Innengewinde in dem zu spannenden Werkstück eingeschraubt wird.

Darüber hinaus weist die erfindungsgemäße Spannvorrichtung mindestens ein Spannelement auf, um den Einzugsnippel im eingeführten Zustand in der Aufnahmebohrung festzuspannen.

Ferner weist die erfindungsgemäße Spannvorrichtung an ihrer Oberseite eine Auflagefläche auf, auf der das Werkstück im gespannten Zustand aufliegt.

Der vorstehend beschriebene Aufbau der erfindungsgemäßen Spannvorrichtung entspricht im Wesentlichen der herkömmlichen Spannvorrichtung, die von der Anmelderin unter der Marke SPEEDY hydratec™ vertrieben wird, so dass diesbezüglich auf eine detaillierte Beschreibung verzichtet werden kann. Hinsichtlich des Aufbaus und der Funktionsweise der Aufnahmebohrung, des Einzugsnippels, des Spannelements und der Auflagefläche wird jedoch auf die bereits vorstehend zitierte Patentanmeldung DE 10 2007 031 463 A1 verwiesen, deren Inhalt der vorliegenden Beschreibung in vollem Umfang zuzurechnen ist.

Darüber hinaus weist die erfindungsgemäße Spannvorrichtung einen Höhenausgleich auf, der einen vertikalen Ausgleichshub der Auflagefläche relativ zu den sonstigen Bauteilen der Spannvorrichtung ermöglicht. Dies bedeutet, dass die Auflagefläche aufgrund des Höhenausgleichs nach oben bzw. nach unten ausweichen kann, wenn dies durch das Einspannen des Werkstücks in anderen Spannvorrichtungen mechanisch erzwungen wird. Dies bietet den Vorteil, dass auch bei einem Einspannen eines Werkstücks in mehr als drei Spannvorrichtungen eine mechanische Überbestimmung vermieden wird, wodurch auch unerwünschte mechanische Verspannungen verhindert werden.

Ferner weist die erfindungsgemäße Spannvorrichtung vorzugsweise eine Arretierungsvorrichtung auf, um den Höhenausgleich bzw. die Auflagefläche in einer ausgeglichenen Höhenlage nach dem Festspannen des Einzugsnippels in der Aufnahmebohrung zu arretieren. Beim Betrieb der erfindungsgemäßen Spannvorrichtung wird also zunächst der Einzugsnippel in der Aufnahmebohrung festgespannt, wobei der Höhenausgleich zunächst noch nicht arretiert ist, so dass die Auflagefläche einen vertikalen Ausgleichshub ausführen kann. Nach der Beendigung des Festspannens des Einzugsnippels in der Aufnahmebohrung wird der Höhenausgleich dann jedoch mittels der Arretierungsvorrichtung arretiert, so dass die Auflagefläche dann in vertikaler Richtung nicht mehr ausweichen kann, wodurch die Auflagefläche im arretierten Zustand ihre Funktion als Auflagefläche erfüllen kann.

In einem bevorzugten Ausführungsbeispiel der Erfindung ist die Arretierungsvorrichtung eine Klemmvorrichtung, die den Höhenausgleich festklemmt und kraftschlüssig arretiert. Die Erfindung ist jedoch hinsichtlich der Wirkungsweise der Arretierungsvorrichtung nicht auf eine kraft- bzw. reibschlüssige Arretierung des Höhenausgleichs beschränkt. Vielmehr besteht im Rahmen der Erfindung auch die Möglichkeit, dass die Arretierungsvorrichtung den Höhenausgleich formschlüssig oder in sonstiger Weise arretiert.

In dem bevorzugten Ausführungsbeispiel weist die Klemmvorrichtung eine Klemmhülse auf, wie sie beispielsweise von der Firma Kostyrka GmbH, Motorstraße 41, 70499 Stuttgart (Deutschland) erhältlich ist. Diese Klemmhülse ist hierbei zwischen einem Innenteil und einem Außenteil angeordnet und umgibt das Innenteil mantelförmig, wobei das Innenteil höhenverschiebbar ist, während die Klemmhülse von außen über einen Druckanschluss mit Druck beaufschlagt werden kann, um die Klemmhülse zusammenzupressen und dadurch das Innenteil festzuklemmen. In dem vorstehend erwähnten Innenteil befindet sich hierbei die Aufnahmebohrung für den Einzugsnippel und das Spannelement sowie die Auflagefläche für das Werkstück, wobei das Innenteil im Wesentlichen der herkömmlichen Spannvorrichtung entspricht, wie sie von der Anmelderin unter der Bezeichnung SPEEDY hydratec™ vermarktet wird. Bei dem vorstehend erwähnten Druckanschluss handelt es sich vorzugsweise um einen Hydraulikanschluss zur Zuführung eines Hydrauliköls, da die Klemmvorrichtung vorzugsweise hydraulisch arbeitet.

Es wurde bereits vorstehend erwähnt, dass das gesamte Innenteil der erfindungsgemäßen Spannvorrichtung in dem Außenteil höhenverschiebbar gelagert ist und von der Klemmhülse in einer bestimmten Höhenlage festgeklemmt werden kann. In dem bevorzugten Ausführungsbeispiel der Erfindung ist zusätzlich ein Gewichtsausgleich vorgesehen, der das Gewicht des gesamten Innenteils ausgleicht und das Innenteil ohne eine äußere Belastung in einer Neutralstellung hält, so dass eine bidirektionale Höhenausgleichsbewegung des Innenteils mit der Auflagefläche relativ zu dem Außenteil möglich ist. Der Gewichtsausgleich ermöglicht also vorteilhaft, dass das Innenteil mit der Auflagefläche sowohl nach oben als auch nach unten ausweichen kann, sofern dies erforderlich ist.

In dem bevorzugten Ausführungsbeispiel der Erfindung weist der Gewichtsausgleich mindestens eine Feder auf, die das Innenteil in dem Außenteil nach oben drückt. Die Feder stützt sich also vorzugsweise auf der einen Seite an dem Außenteil und an der gegenüberliegenden Seite an dem Innenteil ab, so dass die Feder Innenteil und Außenteil in vertikaler Richtung auseinander drückt, um den Gewichtsausgleich zu bewirken.

Darüber hinaus weist der Gewichtsausgleich vorzugsweise ein Einstellelement (z.B. eine Einstellschraube) auf, um die Vorspannung der Feder einzustellen. Dies ermöglicht vorteilhaft eine Anpassung der Vorspannung der Feder an das Gewicht des gesamten höhenverschiebbaren Innenteils.

Ferner ist vorzugsweise eine Hubbegrenzung vorgesehen, um den vertikalen Ausgleichshub der Auflagefläche zu begrenzen. Diese Hubbegrenzung kann beispielsweise aus einer Begrenzungsschraube bestehen, die in ein entsprechend angepasstes Innengewinde in der Klemmhülse eingeschraubt ist und mit ihrer Spitze in die Mantelfläche des höhenverschiebbaren Innenteils eingreift.

Es wurde bereits vorstehend erwähnt, dass der Höhenausgleich der erfindungsgemäßen Spannvorrichtung vorzugsweise eine bidirektionale Ausgleichsbewegung der Auflagefläche ermöglicht und zwar sowohl nach oben als auch nach unten. Es besteht jedoch im Rahmen der Erfindung auch die Möglichkeit, dass die Spannvorrichtung lediglich eine unidirektionale Ausgleichsbewegung der Auflagefläche ermöglicht und zwar entweder nach oben oder nach unten.

Weiterhin ist zu erwähnen, dass die erfindungsgemäße Spannvorrichtung vorzugsweise verhindert, dass Bearbeitungsreste (z.B. Späne) oder sonstige Schmutzpartikel in die Aufnahmebohrung eindringen. An dieser Stelle ist lediglich zu erwähnen, dass die erfindungsgemäße Spannvorrichtung dann mehrere Druckanschlüsse aufweist, um Ausblasluft bzw. Sperrluft und sonstige Antriebsfluide (z.B. Hydrauliköl, Druckluft) zuzuführen bzw. abzuführen, wobei über diese Druckanschlüsse auch eine Lösekontrolle der Spannvorrichtung oder eine Auflagekontrolle durchgeführt werden kann, wobei im Rahmen der Auflagekontrolle geprüft wird, ob das Werkstück auf der Auflagefläche aufliegt. Im Gegensatz zu den herkömmlichen Spannvorrichtungen sieht die Erfindung jedoch vor, dass diese Druckanschlüsse mit flexiblen Schläuchen verbunden sind, so dass die Schläuche aufgrund ihrer Flexibilität den Höhenausgleich nicht behindern.

Es wurde bereits eingangs erwähnt, dass der erfindungsgemäße Höhenausgleich einen vertikalen Ausgleichshub der Auflagefläche erlaubt, wodurch Verspannungen bei einer mechanischen Überbestimmung verhindert werden. In dem bevorzugten Ausführungsbeispiel ist die Spannvorrichtung so ausgelegt, dass der Höhenausgleich einen Ausgleichshub von mindestens 0,1mm, 0,2mm, 0,3mm, 0,4mm, 0,5mm oder sogar 0,6mm ermöglicht. Die Erfindung ist jedoch hinsichtlich des maximal möglichen Ausgleichshubs des Höhenausgleichs nicht auf die vorstehend exemplarisch genannten Grenzwerte beschränkt, sondern grundsätzlich auch mit anderen Werten für den maximalen Ausgleichshub realisierbar.

In der vorstehenden Beschreibung wurde lediglich eine erfindungsgemäße Spannvorrichtung als einzelnes Bauteil beschrieben. Die Erfindung ist umfasst jedoch auch ein Spannsystem mit mindestens vier Spannvorrichtungen zum Einspannen eines Werkstücks. Zur Vermeidung einer mechanischen Überbestimmung und der damit verbundenen mechanischen Verspannung weist mindestens eine der Spannvorrichtungen einen Höhenausgleich auf, wie er vorstehend beschrieben wurde. Die anderen Spannvorrichtungen sind dagegen vorzugsweise als Nullpunkt-Spannvorrichtungen ausgebildet, die das Werkstück somit jeweils auf einen bestimmten vorgegebenen Nullpunkt positionieren. Die Spannvorrichtung mit dem integrierten Höhenausgleich dient dagegen in der Regel nicht zur Nullpunkt-Positionierung des Werkstücks.

Ferner umfasst die Erfindung auch ein neuartiges Betriebsverfahren für eine derartige Spannvorrichtung, bei dem ein Höhenausgleich der Auflagefläche durchgeführt wird, um die mechanischen Verspannungen aufgrund einer mechanischen Überbestimmung zu vermeiden. Hinsichtlich der einzelnen Verfahrensschritte des erfindungsgemäßen Betriebsverfahrens wird zur Vermeidung von Wiederholungen auf die vorstehende Beschreibung verwiesen.

Darüber hinaus ist zu erwähnen, dass der im Rahmen dieser Beschreibung verwendete Begriff eines zu spannenden Werkstücks allgemein zu verstehen ist und nicht nur Werkstücke im engeren Sinne umfasst, die beispielsweise für eine anschließende Bearbeitung in einer Werkzeugmaschine gespannt werden sollen. So eignet sich die erfindungsgemäße Spannvorrichtung allgemein zum Spannen von Gegenständen, Vorrichtungen oder Bauteilen, die einen Einzugsnippel aufweisen, der in die Spannvorrichtung eingeführt werden kann. Beispielsweise kann es sich hierbei um ein Element mit mehreren Auflageinseln handeln. Weiterhin besteht im Rahmen der Erfindung die Möglichkeit, dass das zu spannende Werkstück ein Motorblock ist, in den mehrere Einzugsnippel eingeschraubt sind, so dass der Motorblock direkt eingespannt werden kann.

Schließlich ist zu bemerken, dass der Höhenausgleich bei der erfindungsgemäßen Spannvorrichtung vorzugsweise stattfindet, während der Einzugsnippel gespannt wird. Das Spannen des Einzugsnippels in der Spannvorrichtung führt also dazu, dass die Spannvorrichtung die geeignete Höhenlage entsprechend dem zu spannenden Werkstück einnimmt.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert. Es zeigen:
- Figur 1: eine Perspektivansicht einer erfindungsgemäßen Spannvorrichtung mit einem Höhenausgleich,
- Figur 2: eine Querschnittsansicht der Spannvorrichtung aus Figur 1,
- Figur 3: eine Querschnittsansicht eines höhenverschiebbaren Innenteils der erfindungsgemäßen Spannvorrichtung aus den Figuren 1 und 2,
- Figur 4: eine Querschnittsansicht einer Klemmhülse der Spannvorrichtung aus den Figuren 1 bis 3,
- Figur 5: eine Bodenansicht der Spannvorrichtung aus den Figuren 1 bis 4,
- Figur 6: eine Explosionsdarstellung der Spannvorrichtung aus den Figuren 1 bis 5,
- Figur 7: ein Flussdiagramm zur Verdeutlichung des Betriebsverfahrens der erfindungsgemäßen Spannvorrichtung beim Festspannen eines Werkstücks,
- Figur 8: ein Flussdiagramm des erfindungsgemäßen Betriebsverfahrens der Spannvorrichtung beim Lösen eines Werkstücks, sowie
- Figuren 9A, 9B: einen Schnellspannverschluss mit mehreren Auflageinseln und einer zentralen Spannvorrichtung mit einem erfindungsgemäßen Höhenausgleich.

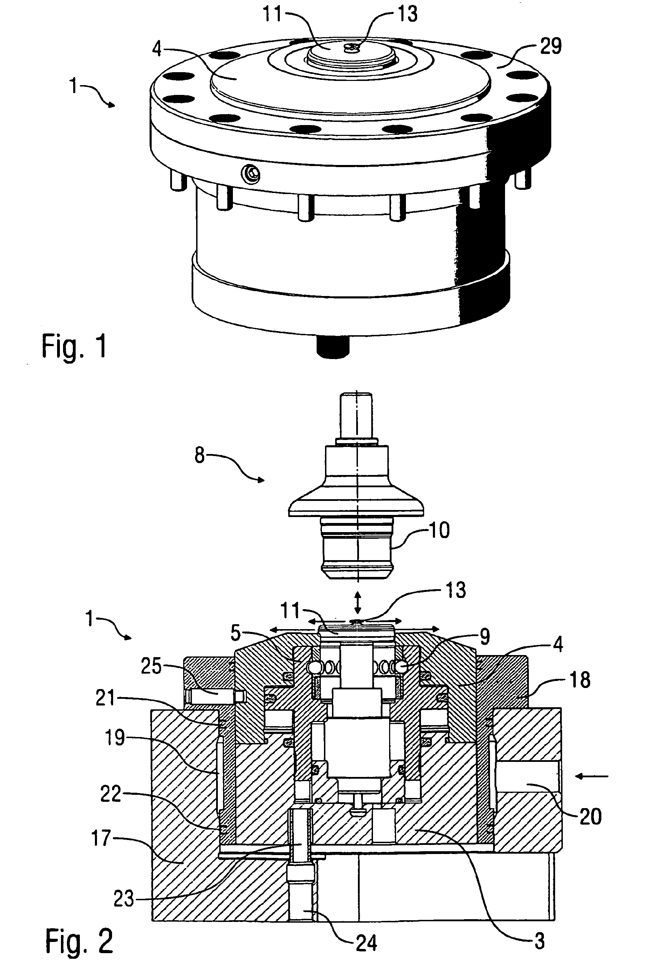

Im Folgenden wird nun eine erfindungsgemäße Spannvorrichtung 1 beschrieben, wie sie in den Figuren 1-6 dargestellt ist.

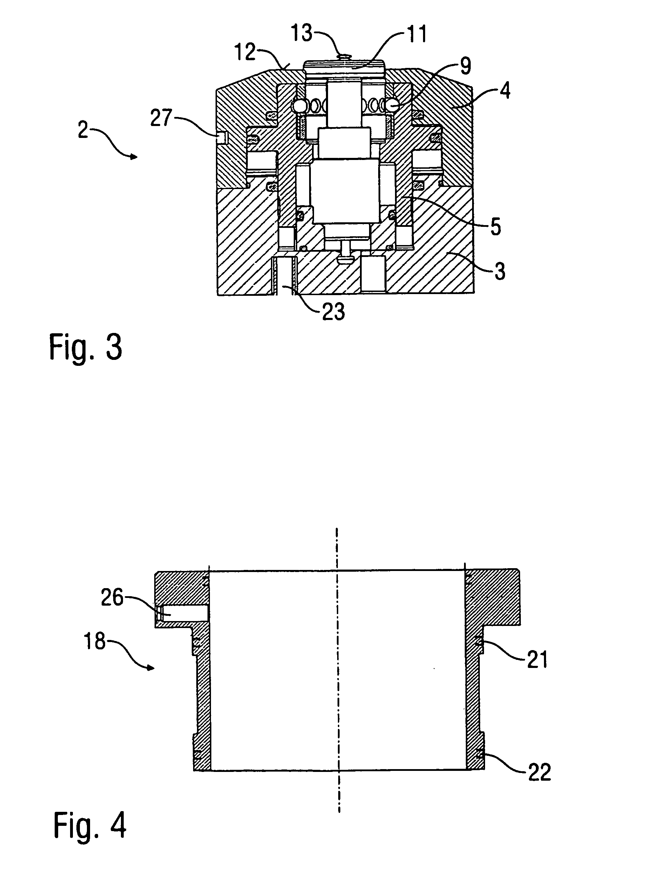

Die Spannvorrichtung 1 weist als ein Innenteil 2 eine herkömmliche Spannvorrichtung ohne einen Höhenausgleich auf, wie sie beispielsweise von der Anmelderin unter der Bezeichnung SPEEDY hydratec™ vertrieben wird, wobei das Innenteil 2 alleine in Figur 3 dargestellt ist.

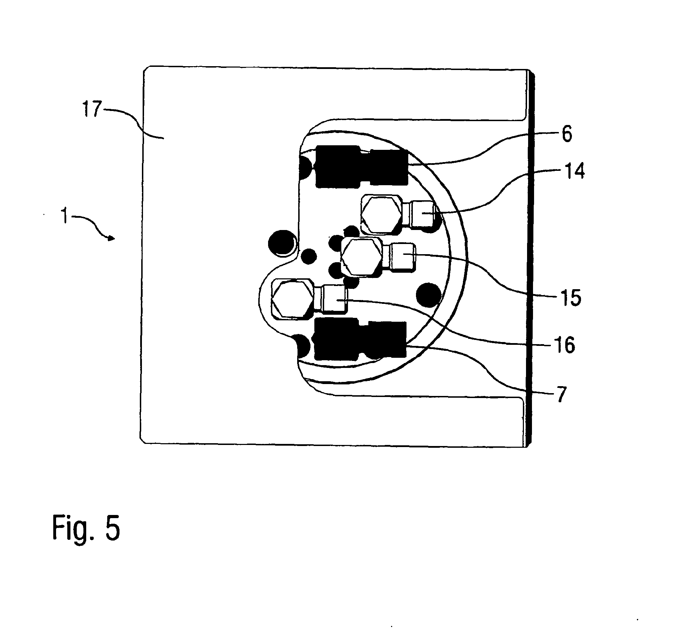

So weist das Innenteil 2 ein Unterteil 3 und ein Oberteil 4 auf, wobei das Oberteil 4 bündig auf das Unterteil 3 aufgesetzt ist. In dem Innenteil 2 ist ein Kolben 5 höhenverschiebbar angeordnet, wobei der Kolben 5 an seiner Mantelfläche gegenüber der Innenfläche des Oberteils 4 und des Unterteils 3 durch mehrere Dichtringe abgedichtet ist. Der Kolben 5 kann über zwei Hydraulikanschlüsse 6, 7 an seiner Oberseite bzw. an seiner Unterseite mit Druck beaufschlagt werden, um den Kolben 5 nach unten bzw. nach oben zu schieben, wobei die Hydraulikanschlüsse 6, 7 in Figur 5 dargestellt sind.

Die Figuren 2 und 3 zeigen hierbei eine Freigabestellung des Kolbens 5, in der ein Einzugsnippel 8 in eine Aufnahmebohrung der Spannvorrichtung 1 eingeführt bzw. daraus herausgezogen werden kann.

Zum Festspannen des Einzugsnippels 8 in der Aufnahmebohrung der Spannvorrichtung wird der Kolben 5 dagegen hydraulisch nach unten gefahren. Dies hat zur Folge, dass mehrere Kugeln 9, die in einem Kugelkäfig gelagert sind, nicht mehr radial nach außen ausweichen können und deshalb in eine Ringnut 10 in dem Einzugsnippel 8 eingreifen und den Einzugsnippel 8 dadurch im eingeführten Zustand festspannen.

In den Figuren 1-3 ist die Aufnahmebohrung der Spannvorrichtung 1 durch einen Verschlusskolben 11 abgedeckt, um zu verhindern, dass Schmutzpartikel in die Aufnahmebohrung eindringen. Der Verschlusskolben 11 wird in der Aufnahmebohrung der Spannvorrichtung 1 pneumatisch nach oben gedrückt, wenn der Einzugsnippel 8 aus der Aufnahmebohrung entfernt wird.

Darüber hinaus ermöglicht der Verschlusskolben 11 auch das Abblasen von Ausblasluft bzw. Sperrluft, um in die Aufnahmebohrung eingedrungene Schmutzpartikel zu entfernen bzw. das Eindringen von Schmutzpartikeln in die Aufnahmebohrung zu verhindern.

Hierzu weist der Verschlusskolben 11 in dem in Figur 3 über eine Auflagefläche 12 hinausstehenden Teil einen ringförmig umlaufenden Ausblasspalt auf, aus dem Ausblasluft radial abgegeben wird, wie in Figur 2 durch die waagerecht verlaufenden Pfeile angedeutet ist.

Darüber hinaus weist der Verschlusskolben 11 an seiner oben liegenden Stirnfläche eine Ausblasdüse 13 auf, die nach oben hervorsteht und ebenfalls Ausblasluft in radialer Richtung nach allen Seiten abgibt, wie in Figur 1 durch Pfeile angedeutet ist.

Zur Zuführung der Ausblasluft bzw. der Sperrluft und zur Lösekontrolle sowie zur Auflagekontrolle weist die Spannvorrichtung 1 mehrere Pneumatikanschlüsse 14-16 auf, die in Figur 5 dargestellt sind. Im Rahmen der pneumatischen Auflagekontrolle wird überprüft, ob ein Werkstück auf der Auflagefläche 12 an der Oberseite der Spannvorrichtung 1 aufliegt. Dies äußert sich nämlich darin, dass die Ausblasluft einem größeren Gegendruck begegnet, was sich in der Pneumatikleitung der Ausblasluft wiederspiegelt.

Das vorstehend beschriebene und weitgehend herkömmlich funktionierende Innenteil 2 ist im Rahmen der erfindungsgemäßen Spannvorrichtung in einem topfförmigen Gehäuse 17 höhenverschiebbar gelagert, wobei das Gehäuse 17 ein Außenteil bildet. Zwischen dem Innenteil 2 und dem Gehäuse 17 befindet sich eine Klemmbuchse 18, wie sie beispielsweise von der Firma Kostyrka GmbH, Motorstraße 41, 70499 Stuttgart (Deutschland) erhältlich ist. Die Klemmbüchse 17 ermöglicht es, das höhenverschiebbare Innenteil 2 in dem Gehäuse 17 in einer bestimmten Höhenlage festzuklemmen. Hierzu umgibt die Klemmbüchse 18 ein Kunststoffmantel 19, der über einen Hydraulikanschluss 20 mit Druck beaufschlagt werden kann, um die Klemmbüchse 18 radial zusammenzudrücken und dadurch das Innenteil 2 in dem Gehäuse 17 festzuklemmen. Die äußere Mantelfläche der Klemmbüchse 18 ist deshalb über und unter dem Kunststoffmantel 19 gegenüber der Innenfläche des Gehäuses 17 durch Dichtringe 21, 22 abgedichtet.

Darüber hinaus weist die Spannvorrichtung 1 einen Gewichtsausgleich auf, der das Gewicht des Innenteils 2 kompensiert und das Innenteil 2 in dem Gehäuse 17 ohne äußere Belastungen in einer Höhenlage hält, die eine bidirektionale Ausgleichsbewegung des Innenteils 2 relativ zu dem Gehäuse 17 ermöglicht und zwar sowohl nach oben als auch nach unten. Der Gewichtsausgleich besteht im Wesentlichen aus einer Feder 23, die an der Unterseite des Innenteils 2 angeordnet ist und sich mit ihrer Unterseite an dem Gehäuse 17 abstützt, so dass die Feder 23 das Innenteil 2 gegenüber dem Gehäuse 17 nach oben drückt. Darüber hinaus weist der Gewichtsausgleich eine Einstellschraube 24 auf, um die Vorspannung der Feder 23 und damit die Neutralstellung des Innenteils 2 einzustellen.

Ferner weist die Spannvorrichtung 1 eine Hubbegrenzung auf, um den vertikalen Ausgleichshub des Innenteils 2 in dem Gehäuse 17 zu begrenzen. Die Hubbegrenzung besteht im Wesentlichen aus einer Schraube 25, die in radialer Richtung in ein Innengewinde 26 in der Klemmbüchse 18 eingeschraubt ist und mit ihrer Spitze in eine Ausnehmung 27 in der äußeren Mantelfläche des Innenteils 2 eingreift.

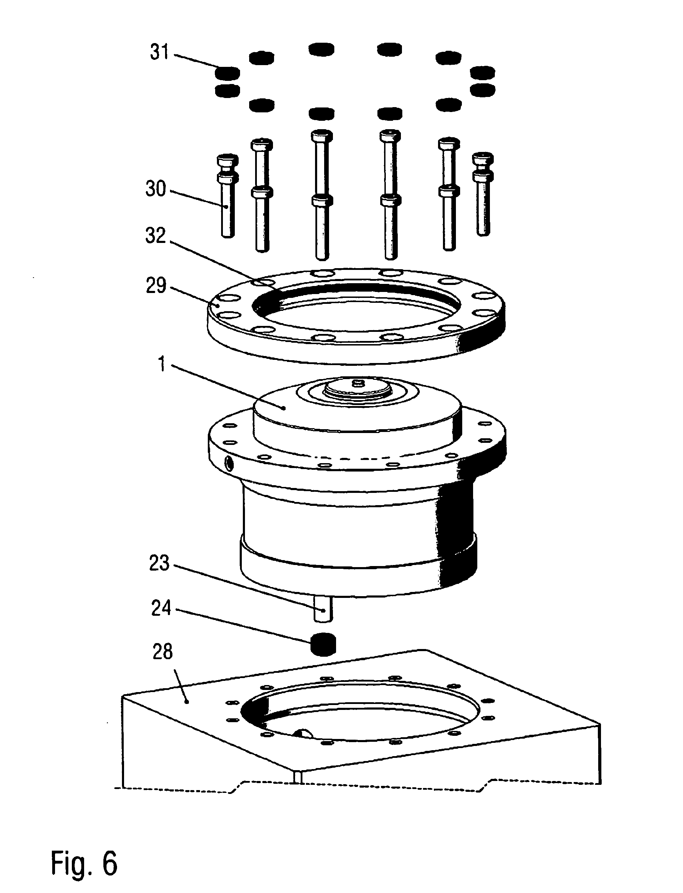

Aus der Explosionsdarstellung in Figur 6 ist ersichtlich, dass die Spannvorrichtung 1 in einem Maschinentisch 28 befestigt werden kann, indem die Spannvorrichtung 1 in eine entsprechende zylindrische Aufnahme in dem Maschinentisch 28 eingesetzt wird. Anschließend wird die Spannvorrichtung 1 in dem Maschinentisch 28 mittels eines Rings 29, mehrerer Befestigungsschrauben 30 und jeweils einer Abdeckung 31 für die Befestigungsschrauben 30 festgeschraubt. Schließlich muss dann noch die Feder 23 für die Gewichtsentlastung mittels der Einstellschraube 24 vorgespannt werden.

Darüber hinaus ist aus der Explosionsdarstellung ersichtlich, dass der Ring 29 an seiner Innenseite einen O-Ring 32 aufweist.

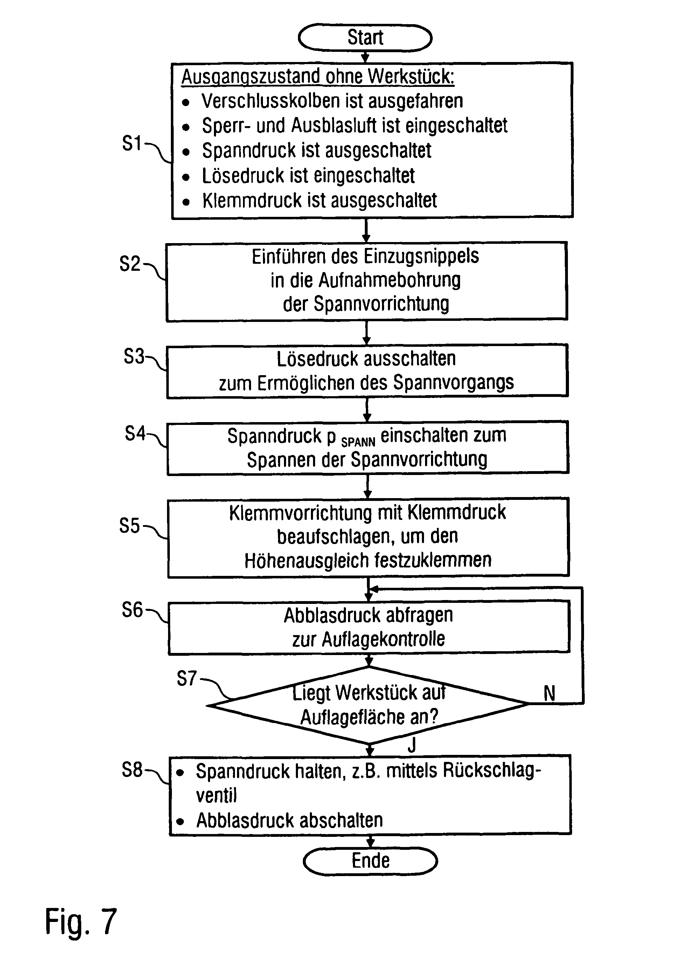

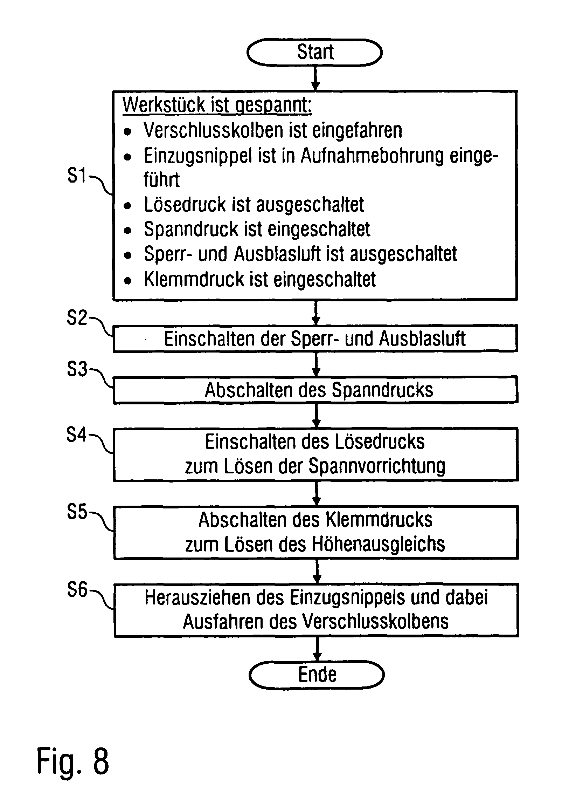

Im Folgenden wird nun unter Bezugnahme auf die Flussdiagramme in den Figuren 7 und 8 das Betriebsverfahren der Spannvorrichtung 1 erläutert. Hierbei zeigt Figur 7 den Ablauf beim Festspannen eines Werkstücks, wohingegen Figur 8 den Ablauf zeigt, wenn ein festgespanntes Werkstück wieder freigegeben wird.

Beim Festspannen eines Werkstücks beschreibt ein Schritt S1 in Figur 7 den Ausgangszustand, wenn der Verschlusskolben 11 ausgefahren ist und die Sperr- und Ausblasluft eingeschaltet ist, um - wie in Figur 1 durch Pfeile angedeutet - Sperrluft abzugeben und dadurch eine Verschmutzung der Aufnahmebohrung zu vermeiden. Darüber hinaus ist die Spannvorrichtung 1 in dem Innenteil 2 der Spannvorrichtung 1 mit einem Lösedruck beaufschlagt und gelöst. Ferner ist auch die Klemmvorrichtung der Spannvorrichtung 1 gelöst, d.h. an dem Hydraulikanschluss 20 liegt kein Druck an, so dass die Klemmbüchse 18 nicht zusammengedrückt wird. Das Innenteil 2 kann also in diesem Ausgangszustand einen vertikalen Ausgleichshub gegenüber dem Gehäuse 17 ausführen.

In einem Schritt S2 wird dann der Einzugsnippel 8 in die Aufnahmebohrung in der Spannvorrichtung 1 eingeführt, wobei der Einzugsnippel 8 den Verschlusskolben 11 nach unten verdrängt.

Nach dem Einführen des Einzugsnippels 8 in die Aufnahmebohrung der Spannvorrichtung 1 wird dann zunächst in einem Schritt S3 der Lösedruck abgeschaltet, damit die Spannvorrichtung anschließend gespannt werden kann.

Hierzu wird in einem Schritt S4 der Spanndruck eingeschaltet, so dass der Einzugsnippel 8 in der Spannvorrichtung 1 gespannt wird. Bei diesem Spannvorgang erfolgt auch der Höhenausgleich, indem das Innenteil 2 in der gelösten Klemmbuchse 18 entsprechend den von außen wirkenden Kräften eine vertikale Ausgleichsbewegung ausführt.

Nach dem Spannen des Einzugsnippels 8 in der Spannvorrichtung 1 wird dann in einem Schritt S5 auch die Klemmvorrichtung mit einem Klemmdruck beaufschlagt, um den Höhenausgleich festzuklemmen. Hierzu kann beispielsweise der ohnehin anliegende Spanndruck über ein Zuschaltventil auf die Klemmvorrichtung gegeben werden.

In einer Variante der Erfindung wird der Klemmdruck erst dann eingeschaltet, wenn der Spanndruck seinen Endwert erreicht hat, d.h. wenn der Spannvorgang vollständig abgeschlossen ist.

In einer anderen Variante der Erfindung wird der Spanndruck dagegen während des Spannvorgangs kontinuierlich erhöht, wobei der Klemmdruck bereits einsetzt, wenn der Spanndruck einen bestimmten Prozentsatz von beispielsweise 60% seines Endwerts erreicht hat. Dies bedeutet, dass der Klemmvorgang bereits beginnt, bevor der Spannvorgang vollständig abgeschlossen ist.

In einem Schritt S6 wird dann der Abblasdruck abgefragt, um zu überprüfen, ob das Werkstück bereits auf der Auflagefläche 12 der Spannvorrichtung 1 aufliegt.

Falls dies der Fall ist, so wird von einem Prüfungsschritt S7 zu einem Schritt S8 übergegangen, in dem dann der Spanndruck beispielsweise mittels eines Rückschlagventils gehalten wird, wohingegen der Abblasdruck dann abgeschaltet werden kann, da eine Abblasung dann nicht mehr erforderlich ist. Der Klemmdruck wird dagegen in dem festgespannten Zustand gemäß Schritt S8 ebenfalls aufrechterhalten, um den Höhenausgleich zu arretieren.

Beim Freigeben des Einzugsnippels 8 aus der Spannvorrichtung 1 gemäß Figur 8 beschreibt der Schritt S1 den Ausgangszustand, in dem der Verschlusskolben 11 eingefahren ist, während der Einzugsnippel 8 in die Aufnahmebohrung der Spannvorrichtung eingeführt und dort festgespannt ist. In diesem Ausgangszustand ist weiterhin die Sperr- und Ausblasluft ausgeschaltet und die Klemmvorrichtung hat Druck und arretiert den Höhenausgleich der Spannvorrichtung 1.

In einem Schritt S2 wird dann zunächst die Sperr- und Ausblasluft eingeschaltet. Dadurch wird verhindert, dass beim anschließenden Herausziehen des Einzugsnippels 8 aus der Aufnahmebohrung der Spannvorrichtung 1 Schmutzteilchen in die Aufnahmebohrung eindringen können.

In einem Schritt S3 wird dann zunächst der Spanndruck abgeschaltet, um zu ermöglichen, dass die Spannvorrichtung 1 gelöst werden kann.

Hierzu wird in einem Schritt S4 der Lösedruck eingeschaltet. Dies hat zur Folge, dass der Kolben 5 der Spannvorrichtung 1 in die in Figur 2 dargestellte Stellung nach oben gefahren wird, so dass die Kugeln 9 radial nach außen ausweichen können, um den Einzugsnippel 8 freizugeben.

In einem Schritt S5 wird dann auch der an dem Hydraulikanschluss 20 anliegende Klemmdruck abgeschaltet, um den Höhenausgleich zu lösen.

In einem nächsten Schritt S6 wird dann der Einzugsnippel 8 aus der Aufnahmebohrung herausgezogen, wobei gleichzeitig der Verschlusskolben 11 ausgefahren wird, um die Aufnahmebohrung abzudichten.

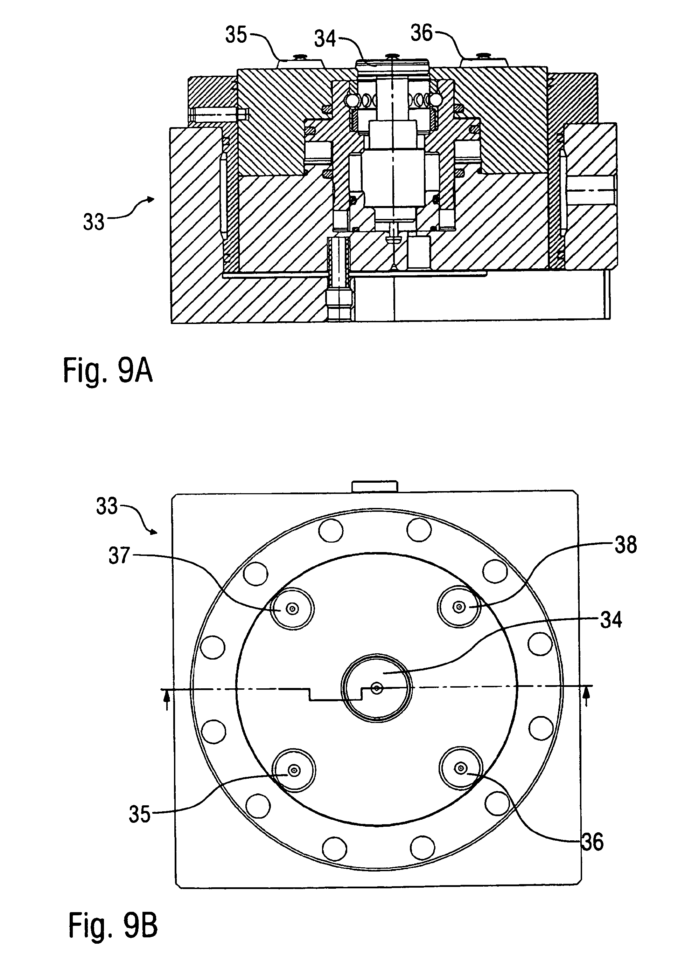

Die Figuren 9A und 9B zeigen einen Schnellspannverschluss 33, der weitgehend herkömmlich ausgebildet und insoweit dem Schnellspannverschluss entspricht, der von der Anmelderin unter der Bezeichnung SPEEDY hydratec 1™ vertrieben wird.

Der Schnellspannverschluss 33 weist eine zentrale Spannvorrichtung 34 auf, die in der vorstehend beschriebenen Weise ausgebildet ist und einen Höhenausgleich ermöglicht.

Darüber hinaus weist der Schnellspannverschluss 33 mehrere Auflageinselns 35-38 auf, auf denen das Werkstück im gespannten Zustand aufliegt, wobei die Auflageinseln ebenfalls einen Höhenausgleich ermöglichen können.

### Bezugszeichenliste:

- 1: Spannvorrichtung
- 2: Innenteil
- 3: Unterteil
- 4: Oberteil
- 5: Kolben
- 6: Hydraulikanschluss
- 7: Hydraulikanschluss
- 8: Einzugsnippel
- 9: Kugeln
- 10: Ringnut
- 11: Verschlusskolben
- 12: Auflagefläche
- 13: Ausblasdüse
- 14: Pneumatikanschluss
- 15: Pneumatikanschluss
- 16: Pneumatikanschluss
- 17: Gehäuse
- 18: Klemmbüchse
- 19: Kunststoffmantel
- 20: Hydraulikanschluss
- 21: Dichtring
- 22: Dichtring
- 23: Feder
- 24: Einstellschraube
- 25: Schraube
- 26: Innengewinde
- 27: Ausnehmung
- 28: Maschinentisch
- 29: Ring
- 30: Befestigungsschrauben
- 31: Abdeckungen
- 32: O-Ring
- 33: Schnellspannverschluss
- 34: Spannvorrichtung
- 35: Auflageinsel
- 36: Auflageinsel
- 37: Auflageinsel
- 38: Auflageinsel

## Patentansprüche

1. Spannvorrichtung (1) zum mechanischen Spannen eines Gegenstands, insbesondere eines Werkstücks, eines Bauteils oder einer Vorrichtung, mit
a) einer Aufnahmebohrung zur Aufnahme eines Einzugsnippels (8), der an dem zu spannenden Gegenstand angebracht ist,
b) mindestens ein Spannelement (5, 9) zum Festspannen des Einzugsnippels (8) in der Aufnahmebohrung, und
c) einer Auflagefläche (12), auf welcher der Gegenstand im gespannten Zustand aufliegt,
**gekennzeichnet durch**
d) einen Höhenausgleich, der einen vertikalen Ausgleichshub der Auflagefläche (12) ermöglicht.

2. Spannvorrichtung (1) nach Anspruch 1, **gekennzeichnet durch** eine Arretierungsvorrichtung (2, 17-25) zur Arretierung des Höhenausgleichs in einer ausgeglichenen Höhenausgleichsstellung nach dem Festspannen des Einzugsnippels (8) in der Aufnahmebohrung.

3. Spannvorrichtung (1) nach Anspruch 2,
**dadurch gekennzeichnet, dass** die Arretierungsvorrichtung (2, 17-25) eine Klemmvorrichtung ist, die den Höhenausgleich festklemmt und kraftschlüssig arretiert.

4. Spannvorrichtung (1) nach Anspruch 3, **dadurch gekennzeichnet, dass** die Klemmvorrichtung (2, 17-25) folgende Bauteile aufweist:
a) ein Innenteil (2), das die Aufnahmebohrung für den Einzugsnippel (8) und das Spannelement (5, 9) enthält und an seiner Oberseite die Auflagefläche (12) für den zu spannenden Gegenstand bildet, und
b) ein Außenteil (17), wobei das Innenteil (2) in dem Außenteil (17) höhenverschiebbar angeordnet ist, und
c) eine Klemmhülse (18), die zwischen dem Außenteil (17) und dem Innenteil (2) angeordnet ist und das Innenteil (2) mantelförmig umgibt, um das Innenteil (2) in einer bestimmten Höhenlage in dem Außenteil (17) festzuklemmen, und
d) einen Druckanschluss (20), insbesondere einen Hydraulikanschluss, zur Zuführung eines Antriebsfluids, insbesondere eines Hydrauliköls, wobei das Antriebsfluid auf die Klemmhülse (18) wirkt und das Innenteil (2) bei einem ausreichenden Druck des Antriebsfluids festklemmt.

5. Spannvorrichtung (1) nach Anspruch 4,
**dadurch gekennzeichnet**
a) **dass** mindestens ein Gewichtsausgleich (23, 24) vorgesehen ist, der das Gewicht des gesamten Innenteils (2) ausgleicht und das Innenteil (2) ohne äußere Belastung in einer Neutralstellung hält, so dass eine bidirektionale Höhenausgleichsbewegung des Innenteils (2) mit der Auflagefläche (12) relativ zu dem Außenteil (17) möglich ist, und
b) **dass** der Gewichtsausgleich (23, 24) mindestens eine Feder (23) oder eine federndes Teil aufweist, um das Innenteil (2) in dem Außenteil (17) nach oben zu drücken, und
c) **dass** zur Vorspannung der Feder (23) ein Einstellelement (24) vorgesehen ist, insbesondere eine Einstellschraube.

6. Spannvorrichtung (1) nach einem der vorhergehenden Ansprüche, **dadurch gekennzeichnet,**
a) **dass** der Höhenausgleich eine Hubbegrenzung (25-27) aufweist, um den Ausgleichshub der Auflagefläche (12) zu begrenzen, und/oder
b) **dass** die Hubbegrenzung (25-27) eine Begrenzungsschraube (25) und ein entsprechend angepasstes Innengewinde (26) in der Klemmhülse (18) aufweist, wobei die Begrenzungsschraube in das Innengewinde der Klemmhülse (18) eingeschraubt ist und mit ihrer Spitze in die Mantelfläche des höhenverschiebbaren Innenteils (2) eingreift.

7. Spannvorrichtung (1) nach einem der vorhergehenden Ansprüche, **dadurch gekennzeichnet,**
a) **dass** mehrere Druckanschlüsse (6, 7, 14-16) vorgesehen sind zur Zuführung von Ausblasluft und/oder Sperrluft, zur Lösekontrolle, zur Auflagekontrolle, zur Zuführung bzw. Abführung eines Antriebsfluids zum Betätigen des Spannelements,
b) **dass** die Druckanschlüsse (6, 7, 14-16) mit Schläuchen verbunden sind,
c) **dass** die Schläuche flexibel sind, um den Höhenausgleich nicht zu behindern.

8. Spannsystem zum Einspannen eines Gegenstands, insbesondere eines Werkstücks, eines Bauteils oder einer Vorrichtung, mit
a) mehreren Nullpunkt-Spannvorrichtungen zum Einspannen und zur gleichzeitigen Nullpunkt-Positionierung von jeweils einem Einzugsnippel (8) des Gegenstands,
b) mindestens einer Spannvorrichtung (1) nach einem der vorhergehenden Ansprüche zum Einspannen eines weiteren Einzugsnippels (8) des Gegenstands und zur Gewährleistung eines Höhenausgleichs.

9. Betriebsverfahren für eine Spannvorrichtung (1), insbesondere für eine Spannvorrichtung (1) nach einem der vorhergehenden Ansprüche, mit den folgenden Schritten:
a) Einführen eines Einzugsnippels (8) in eine Aufnahmebohrung der Spannvorrichtung (1), wobei der Einzugsnippel (8) an einem Gegenstand angebracht ist, der gespannt werden soll,
b) Festspannen des Einzugsnippels (8) in der Aufnahmebohrung mittels mindestens eines Spannelements (5, 9), so dass der Gegenstand auf einer Auflagefläche (12) der Spannvorrichtung (1) aufliegt,
**gekennzeichnet durch** folgenden Schritt:
c) Höhenausgleich der Auflagefläche (12) **durch** einen vertikalen Ausgleichshub der Auflagefläche (12).

10. Betriebsverfahren nach Anspruch 9, **gekennzeichnet durch** folgenden Schritt:
Arretieren der Auflagefläche (12) in einer bestimmten Höhenausgleichsstellung nach dem Festspannen des Einzugsnippels (8) in der Aufnahmebohrung der Spannvorrichtung (1) und nach der Durchführung des Höhenausgleichs.

11. Betriebsverfahren nach Anspruch 10,
**gekennzeichnet durch** folgende Schritte:
a) Durchführen einer Auflagekontrolle, wobei im Rahmen der Auflagekontrolle geprüft wird, ob der zu spannende Gegenstand auf der Auflagefläche (12) der Spannvorrichtung (1) aufliegt,
b) Beginnen der Arretierung der Auflagefläche (12), wenn die Auflagekontrolle ergibt, dass der Gegenstand auf der Auflagefläche (12) der Spannvorrichtung (1) aufliegt.

12. Betriebsverfahren nach Anspruch 10,
**dadurch gekennzeichnet,**
a) **dass** die Auflagefläche (12) mittels einer druckbetriebenen Klemmvorrichtung (2, 17-25) festgeklemmt und damit arretiert wird, wobei die Klemmvorrichtung (2, 17-25) mit einem Klemmdruck beaufschlagt wird, und
b) **dass** das Spannelement (5, 9) druckbetrieben ist und zum Spannen des Gegenstand mit einem Spanndruck (p_{SPANN}) beaufschlagt wird, und
c) **dass** die Klemmvorrichtung (2, 17-25) beim Spannen erst dann mit dem Klemmdruck beaufschlagt wird, wenn der Spanndruck (p_{SPANN}) einen vorgegebenen Prozentsatz eines maximalen Spanndrucks (p_{MAX}) erreicht hat, oder
d) **dass** die Klemmvorrichtung (2, 17-25) beim Spannen erst dann mit dem Klemmdruck beaufschlagt wird, wenn der Spanndruck (p_{SPANN}) den maximalen Spanndruck (p_{MAX}) erreicht hat.

13. Betriebsverfahren nach einem der Ansprüche 10 bis 12, **gekennzeichnet durch** folgende Schritte:
a) Lösen des Spannelements (5, 9), um den Einzugsnippel (8) wieder freizugeben, und
b) Lösen der Arretierung des Höhenausgleichs, um die Auflagefläche (12) wieder freizugeben, wobei das Lösen des Spannelements (5, 9) und das Lösen der Arretierung im Wesentlichen gleichzeitig erfolgt.

## Claims

1. A clamping device (1) for mechanical clamping of an object, in particular a work piece, a component or an apparatus, with
a) a receiving bore for receiving a feed nipple (8) which is attached to the object to be clamped,
b) at least one clamping element (5, 9) for firm clamping of the feed nipple (8) in the receiving bore, and
c) a support surface (12), on which the object lies in the clamped state,
**characterized by**
d) a height compensation device which allows a vertical compensation stroke of the support surface (12).

2. A clamping device (1) according to Claim 1, **characterized by** a locking device (2, 17-25) for locking the height compensation device in a balanced height compensation position after firm clamping of the feed nipple (8) in the receiving bore.

3. The clamping device (1) according to Claim 2, **characterized in that** the locking device (2, 17-25) is a clamping device which firmly clamps the height compensation device and locks it in a non-positive manner.

4. The clamping device (1) according to Claim 3, **characterized in that** the clamping device (2, 17-25) has the following components:
a) an inner part (2) which contains the receiving bore for the feed nipple (8) and the clamping element (5, 9) and which forms the support surface (12) for the object to be clamped on its upper side, and
b) an outer part (17), wherein the inner part (2) is arranged in a height-adjustable manner in the outer part (17), and
c) a clamping sleeve (18), which is arranged between the outer part (17) and the inner part (2) and surrounds the inner part (2) in a sheath-like manner in order to firmly clamp the inner part (2) at a predefined height in the outer part (17), and
d) a pressure connection (20), in particular a hydraulic connection, for feeding in a drive fluid, in particular an hydraulic oil, wherein the drive fluid acts on the clamping sleeve (18) and firmly clamps the inner part (2) at a sufficient pressure of the drive fluid.

5. The clamping device (1) according to Claim 4, **characterized**
a) **in that** at least one weight counterbalance (23, 24) is provided which compensates the weight of the whole inner part (2) and holds the inner part (2) in a neutral position without any external loading, so that a bidirectional height compensation movement of the inner part (2) with the support surface (12) is possible with respect to the outer part (17), and
b) **in that** the weight counterbalance (23, 24) has at least one spring (23) or a sprung part in order to press the inner part (2) upwards into the inner part (17), and
c) **in that** there is an adjusting element (24) provided for preloading the spring (23), in particular an adjusting screw.

6. The clamping device (1) according to any one of the preceding claims, **characterized**
a) **in that** the height compensation device has a stroke limiter (25-27) in order to limit the compensation stroke of the support surface (12), and/or
b) **in that** the stroke limiter (25-27) has a limiting screw (25) and an accordingly adapted internal thread (26) in the clamping sleeve (18), wherein the limiting screw is screwed into the internal thread of the clamping sleeve (18) and engages with its tip in the lateral surface of the height-adjustable inner part (2).

7. The clamping device (1) according to any one of the preceding claims, **characterized**
a) **in that** a plurality of pressure connections (6, 7, 14-16) are provided to feed blow-out air and/or sealing air, for release controlling, for seating control, for feeding in or removal of a drive fluid to actuate the clamping element,
b) **in that** the pressure connections (6, 7, 14-16) are connected by hoses,
c) **in that** the hoses are flexible in order not to hinder the height compensation.

8. A clamping system (1) for clamping an object, in particular a work piece, a component or an apparatus, with
a) a plurality of zero-point clamping devices for clamping and for simultaneous zero-point positioning of one feed nipple (8) of the object in each case,
b) at least one clamping device (1) according to any one of the preceding claims for clamping one further feed nipple (8) of the object and for achieving height compensation.

9. An operating method for a clamping device (1), in particular for a clamping device (1) according to any one of the preceding claims, with the following steps:
a) Introduction of a feed nipple (8) into a receiving bore on the clamping device (1), wherein the feed nipple (8) is attached to an object, which is to be clamped,
b) Firm clamping of the feed nipple (8) in the receiving bore by means of at least one clamping element (5, 9) so that the object lies on a support surface (12) of the clamping device (1),
**characterized by** the following step:
c) height compensation of the support surface (12) by a vertical compensation stroke of the support surface (12).

10. The operating method according to Claim 9, **characterized by** the following step:
locking of the support surface (12) in a particular height compensation position after firmly clamping the feed nipple (8) in the receiving bore of the clamping device (1) and after performing the height compensation.

11. The operating method according to Claim 10, **characterized by** the following steps:
a) performing of seating control, wherein checks are made as part of the seating control as to whether the object to be clamped is lying on the support surface (12) of the clamping device (1),
b) beginning of locking of the support surface (12) if the seating control results in that the object is lying on the support surface (12) of the clamping device (1).

12. The operating method according to Claim 10, **characterized**
a) **in that** the support surface (12) is firmly clamped by means of a pressure-driven clamping device (2, 17-25) and is thus locked, wherein the clamping device (2, 17-25) is impinged with a clamping pressure, and
b) **in that** the clamping element (5, 9) is pressure-driven and is impinged with the clamping pressure (P_{CLAMP}) to clamp the object, and
c) **in that** the clamping device (2, 17-25) is impinged with the clamping pressure only if the clamping pressure (P_{CLAMP}) has reached a predefined percentage of a maximum clamping pressure (p_{MAX}), or
d) **in that** the clamping device (2, 17-25) is impinged with the clamping pressure only if the clamping pressure (P_{CLAMP}) has reached the maximum clamping pressure (p_{MAX}), or

13. An operating method according to any one of claims 10 to 12,
**characterized by** the following steps:
a) loosening of the clamping element (5, 9) in order to free up the feed nipple (8) again, and
b) loosening of the locking of the height compensation device in order to free up the supporting surface (12) again, wherein loosening of the clamping element (5, 9) and loosening of the locking take place essentially simultaneously.

## Revendications

1. Dispositif de serrage (1) pour le serrage mécanique d'un objet, en particulier d'une pièce à usiner, d'un composant ou d'un dispositif, comportant
a) un alésage de réception pour le logement d'un raccord fileté mâle (8), qui est monté sur l'objet à serrer,
b) au moins un élément de serrage (5, 9) pour le serrage à fond du raccord fileté mâle (8) dans l'alésage de réception, et
c) une surface d'appui (12), sur laquelle l'objet repose en état de serrage,
**caractérisé par**
d) une compensation de hauteur, qui permet une course de compensation verticale de la surface d'appui (12).

2. Dispositif de serrage (1) selon la revendication 1, **caractérisé par** un mécanisme de blocage (2, 17-25) pour le blocage de la compensation de hauteur sur une position de hauteur compensée après le serrage à fond du raccord fileté mâle (8) dans l'alésage de réception.

3. Dispositif de serrage (1) selon la revendication 2, **caractérisé en ce que** le mécanisme de blocage (2, 17-25) est un mécanisme de serrage, qui serre à fond la compensation de hauteur et la bloque par engagement.

4. Dispositif de serrage (1) selon la revendication 3, **caractérisé en ce que** le mécanisme de blocage (2, 17-25) présente les composants suivants :
a) une pièce interne (2) qui contient l'alésage de réception pour le raccord fileté mâle (8) et l'élément de serrage (5, 9) et qui forme à son sommet la surface d'appui (12) pour l'objet à serrer, et
b) une pièce externe (17), la pièce interne (2) étant disposée de manière réglable en hauteur dans la pièce externe (17), et
c) un manchon de serrage (18), disposé entre la pièce externe (17) et la pièce interne (2) et qui entoure la pièce interne (2) en formant une enveloppe pour fixer la pièce interne (2) sur une position de hauteur définie dans la pièce externe (17), et
d) un raccord de pression (20), en particulier un raccord hydraulique, pour l'amenée d'un fluide d'entraînement, en particulier d'une huile hydraulique, ledit fluide d'entraînement agissant sur le manchon de serrage (18) et serrant la pièce interne (2) en cas de pression suffisante du fluide d'entraînement.

5. Dispositif de serrage (1) selon la revendication 4, **caractérisé**
a) **en ce qu'**au moins une compensation de poids (23, 24) est prévue, laquelle compense le poids de la pièce interne (2) dans son ensemble et maintient la pièce interne (2) dans une position neutre sans contrainte extérieure, de manière à permettre une compensation de hauteur bidirectionnelle de la pièce interne (2) avec la surface d'appui (12) par rapport à la pièce externe (17), et
b) **en ce que** la compensation de poids (23, 24) comporte au moins un ressort (23) ou une pièce élastique pour repousser la pièce interne (2) vers le haut dans la pièce externe (17), et
c) **en ce qu'**un élément de réglage (24), en particulier une vis de réglage, est prévu pour la pré-contrainte du ressort (23).

6. Dispositif de serrage (1) selon l'une des revendications précédentes, **caractérisé**
a) **en ce que** la compensation de hauteur comporte une limitation de course (25-27) pour limiter la course de compensation de la surface d'appui (12), et/ou
b) **en ce que** la limitation de course (25-27) comporte une vis de limitation (25) et un filet intérieur (26) ajusté en conséquence dans le manchon de serrage (18), la vis de limitation étant serrée dans le filet intérieur du manchon de serrage (18) et s'engageant par sa pointe dans la surface d'enveloppe de la pièce interne (2) déplaçable en hauteur.

7. Dispositif de serrage (1) selon l'une des revendications précédentes, **caractérisé**
a) **en ce que** plusieurs raccords de pression (6, 7, 14-16) sont prévus pour l'amenée d'air de soufflage et/ou d'air d'étanchéité, pour le contrôle de desserrage, pour le contrôle d'appui, pour l'amenée ou l'évacuation d'un fluide d'entraînement afin d'actionner l'élément de serrage,
b) **en ce que** les raccords de pression (6, 7, 14-16) sont reliés à des tuyaux,
c) **en ce que** les tuyaux sont flexibles, afin de ne pas entraver la compensation de hauteur.

8. Système de serrage pour le serrage d'un objet, en particulier d'une pièce à usiner, d'un composant ou d'un dispositif, comportant
a) plusieurs dispositifs de serrage à point zéro pour le serrage et le positionnement simultané sur le point zéro d'un raccord fileté mâle (8) respectif de l'objet,
b) au moins un dispositif de serrage (1) selon l'une des revendications précédentes, pour le serrage d'un autre raccord fileté mâle (8) de l'objet, et pour assurer, une compensation de hauteur.

9. Procédé de fonctionnement pour un dispositif de serrage (1), en particulier pour un dispositif de serrage (1) selon l'une des revendications précédentes, comprenant les étapes suivantes :
a) insertion d'un raccord fileté mâle (8) dans un alésage de réception du dispositif de serrage (1), le raccord fileté mâle (8) étant appliqué contre un objet qui doit être serré,
b) serrage à fond du raccord fileté mâle (8) dans l'alésage de réception au moyen d'au moins un élément de serrage (5, 9), de telle manière que l'objet repose sur une surface d'appui (12) du dispositif de serrage (1),
**caractérisé par** l'étape suivante :
c) compensation de hauteur de la surface d'appui (12) par une course de compensation verticale de la surface d'appui (12).

10. Procédé de fonctionnement selon la revendication 9, **caractérisé par** l'étape suivante :
fixation de la surface d'appui (12) sur une position de compensation de hauteur définie, après le serrage à fond du raccord fileté mâle (8) dans l'alésage de réception du dispositif de serrage (1) et après l'exécution de la compensation de hauteur.

11. Procédé de fonctionnement selon la revendication 10, **caractérisé par** les étapes suivantes :
a) exécution d'un contrôle d'appui, dans le cadre duquel il est vérifié si l'objet à serrer repose sur la surface d'appui (12) du dispositif de serrage (1),
b) début de la fixation de la surface d'appui (12) lorsqu'il ressort du contrôle d'appui que l'objet repose sur la surface d'appui (12) du dispositif de serrage (1).

12. Procédé de fonctionnement selon la revendication 10, **caractérisé**
a) **en ce que** la surface d'appui (12) est serrée à fond au moyen d'un mécanisme de blocage (2, 17-25) commandé par pression et ainsi fixée, le mécanisme de blocage (2, 17-25) étant soumis à une pression de blocage, et
b) **en ce que** l'élément de serrage (5, 9) est commandé par pression et est soumis à une pression de serrage (P_{SPANN}) pour le serrage de l'objet, et
c) **en ce que** lors du serrage, le mécanisme de blocage (2, 17-25) n'est soumis à la pression de blocage que lorsque la pression de serrage (p_{SPANN}) a atteint un pourcentage de consigne d'une pression de serrage (p_{MAX}) maximale, ou bien
d) **en ce que** lors du serrage, le mécanisme de blocage (2, 17-25) n'est soumis à la pression de blocage que lorsque la pression de serrage (p_{SPANN}) a atteint la pression de serrage (p_{MAX}) maximale.

13. Procédé de fonctionnement selon l'une des revendications 10 à 12, **caractérisé par** les étapes suivantes :
a) desserrage de l'élément de serrage (5, 9) pour libérer le raccord fileté mâle (8), et
b) desserrage de la fixation de la compensation de hauteur pour libérer la surface d'appui (12), le desserrage de l'élément de serrage (5, 9) et le desserrage de la fixation étant effectués sensiblement simultanément.
